**Europäisches Patentamt**

**European Patent Office**

**Office européen des brevets**

(19)

(11) Veröffentlichungsnummer: **0 162 226**
**B1**

(12) **EUROPÄISCHE PATENTSCHRIFT**

(45) Veröffentlichungstag der Patentschrift:
20.07.88

(51) Int. Cl.⁴: **G 01 B 3/00,** G 01 B 21/02

(21) Anmeldenummer: **85103435.5**

(22) Anmeldetag: **22.03.85**

(54) Schutzvorrichtung für Längenmesseinrichtungen.

(30) Priorität: **26.04.84 DE 3415514**

(43) Veröffentlichungstag der Anmeldung:
**27.11.85 Patentblatt 85/48**

(45) Bekanntmachung des Hinweises auf die Patenterteilung:
**20.07.88 Patentblatt 88/29**

(84) Benannte Vertragsstaaten:
**AT CH DE FR GB IT LI**

(56) Entgegenhaltungen:
**DE-A-1 773 933**
**DE-A-3 109 084**
**DE-B-2 460 406**
**GB-A-2 081 901**

(73) Patentinhaber: **Dr. Johannes Heidenhain GmbH,
Nansenstrasse 17, D-8225 Traunreut (DE)**

(72) Erfinder: **Kraus, Heinz, Traunring 74e, D-8225
Traunreut (DE)**

EP 0 162 226 B1

**Beschreibung**

Die Erfindung bezieht sich auf eine Schutzvorrichtung gemäß dem Oberbegriff des Anspruches 1; eine solche ist aus DE-OS-1 773 933 und GB-A-2 081 901 bekannt. Aus einer Vielzahl von Druckschriften ist es bekannt, daß Längen- oder Winkelmeßeinrichtungen zum Schutze vor schädlichen Umgebungseinflüssen mit einem allseitig geschlossenen Gehäuse umgeben werden. Das Gehäuse weist zur Übertragung der Meßbewegung längsseitig einen Schlitz auf, der im allgemeinen mittels elastischer, dachförmig angeordneter Dichtlippen verschlossen ist, durch die örtlich ein Mitnehmer, zur Übertragung der zu messenden Bewegung ins Innere des Gehäuses, hindurch greift.

Als eine der ältesten der relevanten Druckschriften sei hier beispielsweise die DE-OS-1 773 933 genannt. Derartige Anordnungen haben sich als Schutzvorrichtungen bewährt, jedoch ist bei der Montage große Sorgfalt erforderlich, damit die Mittellinie des Mitnehmers - der den Querschnitt eines zweiseitigen Schwertes aufweist - in Längsrichtung genau mit der Stoßkante der sich berührenden Dichtlippen fluchtet.

Bei Winkelabweichuungen von der Fluchtlinie ergeben sich unzulässig große Leckstellen an den schneidenförmigen Ausläufern des Mitnehmers, da sich die Dichtlippen nicht ausreichend exakt an die Oberflächen des Mitnehmers anschmiegen können, da dieser verkantet ist.

Der Erfindung liegt die Aufgabe zugrunde, eine Schutzvorrichtung der eingangs genannten Art zu schaffen, bei der die Montagetoleranzen vergrößert werden können, und bei der dennoch die Abdichtungseigenschaften verbessert werden.

Diese Aufgabe wird durch die im Anspruch 1 angegebenen kennzeichnenden Merkmale gelöst.

Die wesentlichen Vorteile der Erfindung liegen in der Selbstanpassungsfähigkeit des Mitnehmers an die Fluchtung der Dichtlippen/Stoßkante und in der guten Dichtwirkung, auch nach längerem Gebrauch.

Anhand von Ausführungsbeispielen soll die Erfindung mit Hilfe der Zeichnungen noch näher erläutert werden.

Es Zeigt:

Figur 1   eine schematische Teilansicht einer Längenmeßeinrichtung;

Figur 2   eine Variante eines Mitnehmers für eine Längenmeßeinrichtung gemäß Figur 1;

Figur 3   eine weitere Variante eines Mitnehmers für eine Längenmeßeinrichtung gemäß Figur 1.

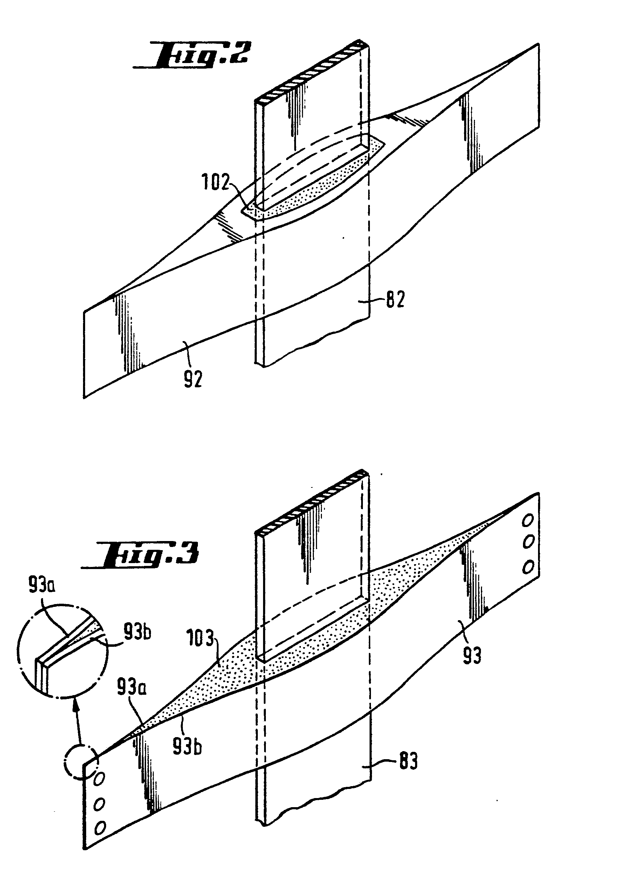

Eine in Figur 1 schematisch dargestellte Längenmeßeinrichtung 1 weist ein Gehäuse 2 aus extrudiertem Aluminium auf, das mit Endstücken 3 an den Stirnseiten hermetisch verschlossen ist. An einer der Längsseiten 4 befindet sich ein Längsschlitz 5, der mit elastischen Dichtlippen 6 und 7 abgedichtet ist. Die Dichtlippen 6,7 sind parallel zum Längsschlitz 5 im Gehäuse 2 eingepaßt und stoßen über der Mitte des Längsschlitzes 5 aneinander. Durch diese stoßende Berührung wird der Längsschlitz 5 hermetisch verschlossen, und so das Innere des Gehäuses 2 gegen Umgebungseinflüsse in sicherer Weise geschützt. Im Inneren des Gehäuses 2 befinden sich ein Maßstab und eine Abtastbaueinheit für die Abtastung des Maßstabes, die hier nicht gezeigt werden, da sie aus dem Stand der Technik hinreichend bekannt sind. Die Abtastbaueinheit wird zur Messung am Maßstab entlang bewegt, und die Bewegung wird über einen in Meßrichtung steifen Mitnehmer 8 durch die Dichtlippen 6, 7 nach außen übertragen.

Da natürlich die Messung kein Selbstzweck ist, ist die Längenmeßeinrichtung 1 an einer ebenfalls nicht dargestellten Maschine montiert, und dient zur Messung der Bewegung des Maschinenschlittens relativ zum Maschinenbett. Auch dies ist hinlänglich bekannt, so daß hierauf nicht näher eingegangen werden muß.

Um den Bereich des örtlichen Durchgriffes des Mitnehmers 8 durch die Dichtlippen 6, 7 dicht zu gestalten, ist ein Aufspreizelement 9 um den Mitnehmer 8 herum angebracht, das im Querschnitt einem zweiseitigen Schwert entspricht. Die Dichtlippen 6, 7 schmiegen sich an die Oberflächen des Aufspreizelementes 9 an, so daß nur ganz kleine Leckstellen entstehen. Um die Abdichtung zu optimieren, ist Gas Aufspreizelement 9 geringfügig um die Achse des Mitnehmers drehbar.

Durch diese Maßnahme kann sich das Aufspreizelement 9 genau fluchtend zur Stoßkante der Dichtlippen 6, 7 einstellen, so daß Leckstellen durch Verkanten des Mitnehmers 8 bei der Montage vermieden werden.

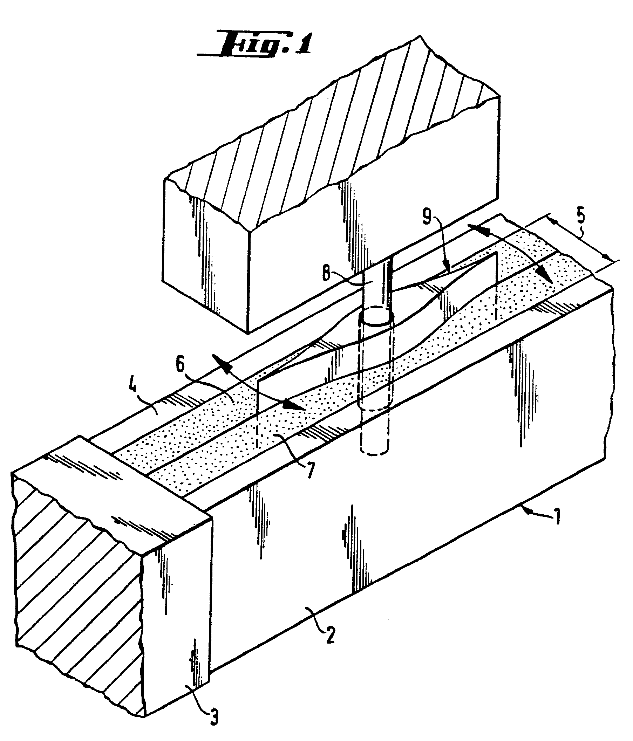

In Figur 2 ist ein Mitnehmer 82 als Element mit rechteckigem Querschnitt dargestellt, was durch ein Vierkantrohr, eine gedruckte Schaltung oder auch ein Lochprofil realisiert werden kann. Ein Aufspreizelement 92 umgibt auch hier den Mitnehmer 82. Zwischen dem Mitnehmer 82 und dem Aufspreizelement 92 ist eine Zwischenlage 102 in ausreichender Dicke angebracht. Die Zwischenlage 102 erlaubt dem Aufspreizelement 92 analog zu Figur 1 eine gewisse Winkelbeweglichkeit zur Mitnehmerachse. Vorteilhaft besteht die Zwischenlage 102 aus einem Elastomer, etwa Siliconkautschuk. Auch bei dieser Variante kann sich das Aufspreizelement 92 fluchtend zur Stoßkante der Dichtlippen einstellen, was hier jedoch nicht mehr dargestellt wird, da der Aufbau im übrigen genau der in Figur 1 gezeigten Meßeinrichtung entspricht.

Auch für die Mitnehmervariante in Figur 3 sind Einzelheiten, die der Einrichtung aus Figur 1 entsprechen, nicht nochmal dargestellt.

Ein als Vierkantrohr, gedruckte Schaltung, Lochprofil oder dgl. ausgebildeter Mitnehmer 83 ist von einem Aufspreizelement 93 umgeben, daß aus zwei sehr dünnen Stahlfolien 93a, 93b besteht, die an ihren Enden verschweißt sind. Die Stahlfolien 93a, 93b sind nur 0,04 mm dicke sehr flexibel, und haben eine feinstgeschliffene äußere Oberfläche. Der sich durch die Aufspreizung der beiden Stahlfolien 93a, 93b ergebende Raum wird um den Mitnehmer 83 herum mit einem Elastomer 103, beispielsweise Siliconkautschuk, gefüllt, so daß ein Aufspreizelement 93 entsteht, das flexibel und winkelbeweglich ist. Die Wandung der Stahlfolien 93a, 93b bleibt nachgiebig und kann sich optimal den berührenden Dichtlippen anpassen.

Sogar eine gewisse Welligkeit der Dichtlippen kann durch diese Ausgestaltung des Augspreizelemented 93 unschädlich gemacht werden, da Flexibilität und Nachgiebigkeit durch die Auswahl der Materialpaarung des Aufspreizelementes 93 und der Dichtlippen hervorragend optimiert werden kann.

So liegt es auch durchaus im Rahmen der Erfindung, das Aufspreizelement 93 einstückig aus flexiblem Material zu fertigen, oder die Wadungselemente aus einem anderen Material als Stahlfolien 93a, 93b herzustellen.

**Patentansprüche**

1. Schutzvorrichtung für eine gekapselte Positionsmeßeinrichtung, mit einem bis auf wenigstens einen Längsschlitz allseitig geschlossenen Gehäuse (2), bei dem der Längsschlitz (5) von elastischen Abdichtelementen (6, 7) verschlossen ist, durch die örtlich ein längs des Schlitzes verschiebbarer, in Verschieberichtung biegesteifer, mit einem die Abdichtelemente aufspreizenden Aufspreizelement (9, 92, 93) versehener Mitnehmer (8, 82, 83) hindurchgreift, der die zu messende Relativbewegung zweier Objekte auf eine Abtasteinrichtung überträgt, die sich zusammen mit einem Maßstab geschützt im Innern des Gehäuses befindet, dadurch gekennzeichnet, daß das Aufspreizelement (9, 92, 93) des Mitnehmers (8, 82, 83) verformbar und/oder drehbar um die durch den Mitnehmer (8, 82, 83) verkörperte Verbindungsachse zwischen den vorgenannten Objekten ist.

2. Schutzvorrichtung nach Anspruch 1, dadurch gekennzeichnet, daß der Mitnehmer (8, 82, 83) quer zur Meßrichtung schwenkbar und das Aufspreizelement (9, 92, 93) um die sich einstellende Mitnehmerachse drehbar ist.

3. Schutzvorrichtung nach Anspruch 1, dadurch gekennzeichnet, daß die Wandung des Aufspreizelementes (93) flexibel ist.

4. Schutzvorrichtung nach Anspruch 1 und 3, dadurch gekennzeichnet, daß das Aufspreizelement (93) den Mitnehmer (83) zweischalig umschließt.

5. Schutzvorrichtung nach Anspruch 1, 3 und 4, dadurch gekennzeichnet, daß die Wandung des Aufspreizelementes (93) aus endseitig verschweißten Stahlfolien (93a, 93b) gebildet wird.

**Claims**

1. Protective device for an encapsulated position measuring device, with a housing (2) closed on all sides apart from a longitudinal slit, in which the longitudinal slit (5) is closed by elastic sealing elements (6, 7), through which engages locally a carrier (8, 82, 83) slidable along the slit, stiff in the sliding direction, provided with a spreader element (9, 92, 93) spreading the sealing elements, which carrier transfers the relative motion to he measured of two objects to a sensing device which is protected inside the housing along with a measuring scale, characterized in that the spreader element (9, 92, 93) of the carrier (8, 82, 83) is deformable and/or rotatable about, the axis of connection between the said objects embodied in the carrier (8, 82, 83).

2. Protective device according to claim 1 , characterized in that the carrier (8, 82, 83) is swingable transverse to the measuring direction and the spreader element (9, 92, 93) is rotatable about the self-adjusting carrier axis.

3. Protective device according to claim 1, characterized in that the wall of the spreader element (93) is flexible.

4. Protective device according to claims 1 and 3, characterized in that the spreader element (93) embraces the carrier (83) with two skins.

5. Protective device according to claims 1, 3 and 4, characterized in that the wall of the spreader element (93) is formed from steel foils (93a, 93b) welded at their ends.

**Revendications**

1. Protection pour un dispositif de mesure de position blindé, dotée d'un carter (2) fermé de toutes parts abstraction faite d'au moins une fente longitudinale dans lequel ladite fente longitudinale (5) est fermée par des éléments d'étanchéité élastiques (6, 7) que traverse localement un organe d'entraînement (8, 82, 83) déplaçable en translation le long de cette même fente, rigide à la flexion en direction de ladite translation et muni d'un élément d'écartement (9, 92, 93) des éléments d'étanchéité qui transmet le mouvement relatif, à mesurer, de deux objets à un dispositif de balayage qui se trouve protégé en même temps qu'une échelle de mesure à l'intérieur du carter, caractérisée par le fait que l'élément d'écartement (9, 92, 93) de l'organe d'entraînement (8, 82, 83) est déformable et/ou tournable autour de l'axe de liaison entre les deux objets précités matérialisé par l'organe d'entraînement (8, 82, 83).

2. Protection selon la revendication 1 caractérisée par le fait que l'organe d'entraînement (8, 82, 83) est pivotable transversalement à la direction de mesure et l'élément d'écartement (9, 92, 93) est tournable autour de l'axe réglable dudit organe d'entraînement.

3. Protection selon la revendication 1 caractérisée par le fait que la paroi de l'élément d'écartement (93) est flexible.

4. Protection selon les revendications 1 et 3 caractérisée par le fait que l'élément d'écartement (93) entoure l'organe d'entraînement (83) en double coquille.

5. Protection selon les revendications 1, 3 et 4 caractérisée par le fait que la paroi de l'élément d'écartement (93) est formée de feuilles d'acier (93a, 93b) soudées entre elles du côté de leurs extrémités.

Fig.2

Fig.3

Fig. 1